Europäisches Patentamt

European Patent Office

Office européen des brevets

(11) Veröffentlichungsnummer: **0 073 923**
A1

(12) # EUROPÄISCHE PATENTANMELDUNG

(21) Anmeldenummer: 82106866.5

(22) Anmeldetag: 29.07.82

(51) Int. Cl.³: **H 01 H 3/26**
F 16 H 29/10, F 16 D 41/08

(30) Priorität: 12.08.81 DE 3131903

(43) Veröffentlichungstag der Anmeldung:
16.03.83 Patentblatt 83/11

(84) Benannte Vertragsstaaten:
AT CH FR GB IT LI NL SE

(71) Anmelder: SIEMENS AKTIENGESELLSCHAFT
Berlin und München Wittelsbacherplatz 2
D-8000 München 2(DE)

(72) Erfinder: Silbermann, Erich
Damaschkestrasse 61
D-8521 Bubenreuth(DE)

(54) Elektromotorische Antriebsvorrichtung für die Betätigung eines Trennschalters in elektrischen Schaltanlagen.

(57) Eine solche Antriebsvorrichtung besitzt einen Antriebsmotor (1), der sein Drehmoment über ein Schwinggetriebe, bestehend aus einem von einem Exzenter (3, 4) angetriebenen Schwinghebel (8, 9) und einer Freilaufkupplung (10 bis 15), auf eine Antriebswelle (12) überträgt. Dabei ist die Freilaufkupplung so ausgebildet, daß der Innenquerschnitt der die Antriebswelle (12) umgebenden ringförmigen Nabe (10,11) des Schwinghebels (8, 9) ein symmetrisches Vieleck bildet, in dessen Ecken sich die Rollen (15, 16) der Freilaufkupplung befinden. Diese werden von einem Steuerkäfig (13, 14) geführt, der mit einer Steuerhülse (20) eine auf der Antriebswelle (12) schwenkbare Einheit bildet. Die Steuerhülse (20) ist mit Hilfe von Steuerungsmitteln (5, 17) auf der Antriebswelle (12) derart schwenkbar angeordnet, daß der Steuerkäfig (13, 14), ausgehend von der Freilaufstellung in eine von beiden Kuppelstellungen gelangt, in denen die Rollen (15, 16) an der einen oder anderen der die betreffenden Ecken bildenden Flanken der Innenflächen der Schwinghebelnabe (10, 11) anliegen und diese durch Verkeilung in der von der jeweils gewählten Kuppelstellung abhängigen Drehrichtung mit der Antriebswelle (12) kuppeln.

FIG 1

SIEMENS AKTIENGESELLSCHAFT
Berlin und München

Unser Zeichen
VPA **81 P 3 1 2 4 E**

## Elektromotorische Antriebsvorrichtung für die Betätigung eines Drehschalters in elektrischen Schaltanlagen

Die Erfindung betrifft eine elektromotorische Antriebsvorrichtung für die Betätigung eines Drehschalters in elektrischen Schaltanlagen der im Oberbegriff des Anspruchs 1 näher bezeichneten Art.

Eine solche Antriebsvorrichtung hat für den Antrieb von Drehschaltern als kombinierte Trenn- und Erdungsschalter in elektrischen Schaltanlagen, vorzugsweise Mittelspannungsschaltanlagen, den Vorteil, daß sie wegen der im Vergleich etwa zum Schneckentrieb geringen Reibungskräfte das erforderliche hohe Drehmoment für einen solchen Schalterantrieb mit einer relativ niedrigen Antriebsleistung erbringen kann. Daß dabei das Drehmoment nicht kontinuierlich, sondern impulsweise erbracht wird, spielt für die spezielle Zweckbestimmung der Antriebsvorrichtung keine nachteilige Rolle, sondern ist zur Überwindung der hohen Reibungskräfte eines solchen Schalters eher von Vorteil.

Eine Antriebsvorrichtung der beschriebenen Art ist für den genannten Zweck aus der DE-AS 1 143 896 und der DE-OS 1 490 720 bekannt. Diese bekannte Antriebsvorrichtung kann aber nur für solche Schalterantriebe eingesetzt werden, bei denen ein Ein-Richtungs-Antrieb in Betracht kommt. Dies trifft im wesentlichen für Einstufen-Drehschalter zu. Für Mehrstufen-Drehschalter, beispielsweise kombinierte Trenn- und Erdungsschalter, wie sie in modernen Mittelspannungsschaltanlagen in zunehmendem Maße eingesetzt werden, und bei denen, ausgehend von einer mittleren Schaltstufe als Trennstellung, in der einen Richtung in die Ein-Position und in der anderen Richtung in die Erdungs-Position geschaltet werden soll, ist eine solche Ein-Richtungs-An-

Ru 2 Mar / 06.08.1981

triebsvorrichtung nicht mehr brauchbar.

Der Erfindung liegt die Aufgabe zugrunde, eine Antriebsvorrichtung der eingangs genannten Art zu schaffen, die
in beiden Antriebsrichtungen ein Drehmoment entwickelt.

Diese Aufgabe wird durch die im Anspruch 1 angegebene Erfindung gelöst.

Vorteilhafte Weiterbildungen und Ausgestaltungen der Antriebsvorrichtung nach dem Anspruch 1 sind in den Unteransprüchen gekennzeichnet.

Ein Ausführungsbeispiel der Erfindung wird anhand der
Zeichnungen im folgenden näher erläutert. Es zeigen:

Fig. 1 das Prinzip der erfindungsgemäßen Antriebsvorrichtung als Explosionsdarstellung in der einen Kuppelstellung,

Fig. 2 die Antriebsvorrichtung in einer Teildarstellung
       entsprechend Fig. 1 in der anderen Kuppelstellung
       und

Fig. 3 eine von der Motordrehrichtung unabhängige Dreh-
       richtungs-Umkehrsteuerung in perspektivischer Dar-
       stellung.

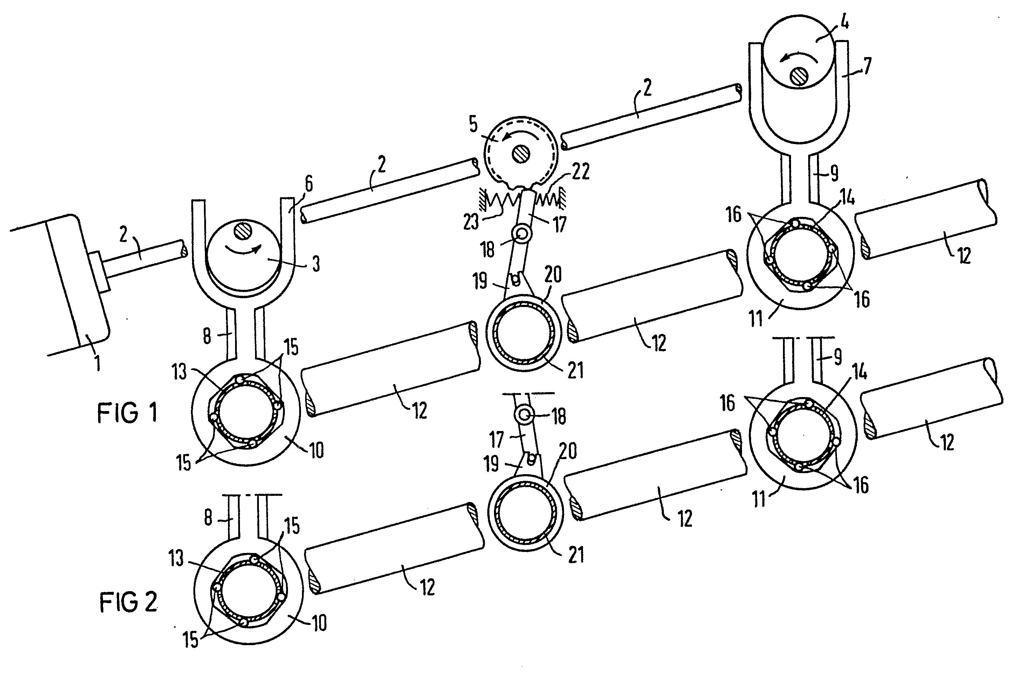

In Fig. 1 treibt ein Elektromotor 1 eine Motorwelle 2 an,
auf der zwei um 180° gegeneinander versetzte Exzenterscheiben 3 und 4 sowie ein zwischen diesen angeordneter
Steuerring 5 befestigt sind. Die Exzenterscheiben 3 und 4
sind von den gabelförmigen Enden 6 und 7 (Schwinggabeln)
je eines Schwinghebels 8, 9 umgeben. Die den Schwinggabeln
6, 7 gegenüberliegenden Enden der Schwinghebel 8, 9 sind
nabenförmig ausgebildet. Die Innenquerschnitte dieser
Schwinghebelnaben 10 und 11 sind quadratisch und bilden die äußeren Gehäuseteile von Freilaufkupplungen, die als weitere Bestandteile von den Schwinghebelnaben umfaßte, auf der Antriebswelle 12 drehbar angeordnete steuerbare Rollenkäfige 13, 14 (Steuerkäfige) besitzen, deren Außendurchmesser etwa der Kantenlänge des quadratischen Innenquerschnitts der Schwinghebelnaben 10 und 11 entspricht. Jedem dieser Steuerkäfige sind Rollen 15 und 16 zugeordnet, die in entsprechend geformte Nuten der Steuerkäfige so eingelegt sind, daß sie aus diesen nach innen und außen herausragen, wobei sich die nach außen herausragenden Teile der Rollen in den durch die Ecken der Schwinghebelnaben gebildeten Hohlräumen befinden. Der auf der Motorwelle 2 befestigte Steuerring 5 hat eine gewellte Oberfläche, an der eine Wippe 17 mit der entsprechend gestalteten Stirnseite ihres einen Hebelarms derart anliegt, daß der Steuerring 5 und die Wippe 17 nach Art einer drehrichtungsunabhängigen Ratsche zusammenwirken. Die über einen Zapfen 18 am im übrigen nicht dargestellten Gehäuse der Antriebsvorrichtung schwenkbar gelagerte Wippe 17 ist mit dem Ende ihres anderen Hebelarms über eine Nase 19 an einer Steuerhülse 20 angelenkt, die ihrerseits auf einem die beiden Steuerkäfige 13 und 14 verbindenden Führungszylinder 21 befestigt ist.

Aus dieser Anordnung ergibt sich folgender Funktionsablauf, der anhand der Fig. 1 und 2 im folgenden näher erläutert werden soll.

Es sei angenommen, daß der Antrieb der Motorwelle 2 vom Motor 1 entgegen dem Uhrzeigersinn erfolgt. Dadurch wird der Schwinghebel 8 von der Schwinggabel 3 zunächst um eine halbe Hubbewegung um die Antriebswelle 12 nach rechts geschwenkt, während der Schwinghebel 9 die entgegengesetzte Bewegung macht. Gleichzeitig wird durch die Drehbewegung der Motorwelle 2 der Steuerring 5 entgegengesetzt dem Uhrzeigersinn gedreht, was zur Folge hat, daß die Wippe 17 gegen den Druck der Schraubenfeder 22 im

Uhrzeigersinn um den Zapfen 18 geschwenkt wird. Dabei drückt die Wippe 17 mit ihrem dem Steuerring 5 abgewandten Hebelarm die Nase 19 der Steuerhülse 20 und damit die Steuerkäfige 13 und 14 in die dargestellte Position. Dies bewirkt, daß die Rollen 15 der ersten Freilaufkupplung 10, 13 und die Rollen 16 der zweiten Freilaufkupplung 11, 14 links an den inneren Flanken der Gabelnaben 10 und 11 anliegen. Wenn sich nun, wie oben geschildert, die Schwinggabel 8 nach rechts, also im Uhrzeigersinn um die Antriebswelle 12 bewegt, verklemmen die Rollen 15 die Gabelnabe 10 mit der Antriebswelle 12. Bei der anderen Schwinggabel 9, die sich entgegengesetzt zu der Schwinggabel 8 bewegt, gelangen die Rollen 16 hingegen in die Freilaufposition, so daß die Schwinggabel 9 ohne zu kuppeln in die linke Extremposition schwingen kann. Nachdem beide Gabeln ihre Extrempunkte erreicht haben und die Motorwelle 2 sich in gleicher Richtung weiterdreht, werden nun in der eben geschilderten Weise umgekehrt die Rollen 16 zwischen der Gabelnabe 11 und der Antriebswelle 12 verklemmt, so daß nunmehr die Schwinggabel 9 als Antriebsgabel dient und die Schwinggabel 8 frei in ihre andere Extremposition zurückschwingen kann. Diese abwechselnde Antriebsfunktion der beiden Schwinggabeln 8 und 9 wiederholt sich, solange sich die Motorwelle in der angegebenen Drehrichtung bewegt. Soll die Drehrichtung der Antriebswelle geändert werden, muß zunächst die Drehrichtung des Motors 1 mit bekannten und daher nicht dargestellten elektrischen Mitteln umgesteuert werden, so daß sich auch der Steuerring 5 nunmehr im Uhrzeigersinn dreht. Dies führt gemäß Fig. 2 dazu, daß die Wippe 17 um den Zapfen 18 und gegen den Druck der Schraubenfeder 23 entgegen dem Uhrzeigersinn in ihre andere Extremposition gelangt und dabei über die Nase 19 auch die Steuerhülse 20 in ihre zur dargestellten Position entgegengesetzte Position bewegt. Dadurch liegen nunmehr die Rollen 15 der ersten Freilaufkupplung 10, 13 und die Rollen 16 der zweiten Freilaufkupplung 11, 14 an den rechten Flanken der Innen- käfige der Gabelnaben 10 und 11 an. Dies führt entsprechend der bereits beschriebenen Funktionsweise dazu, daß die Rollen 15 und 16 nur bei einer Linksbewegung der Schwinggabeln 8 bzw. 9 mit der Antriebswelle verklemmen, so daß diese in eine Linksdrehung versetzt wird.

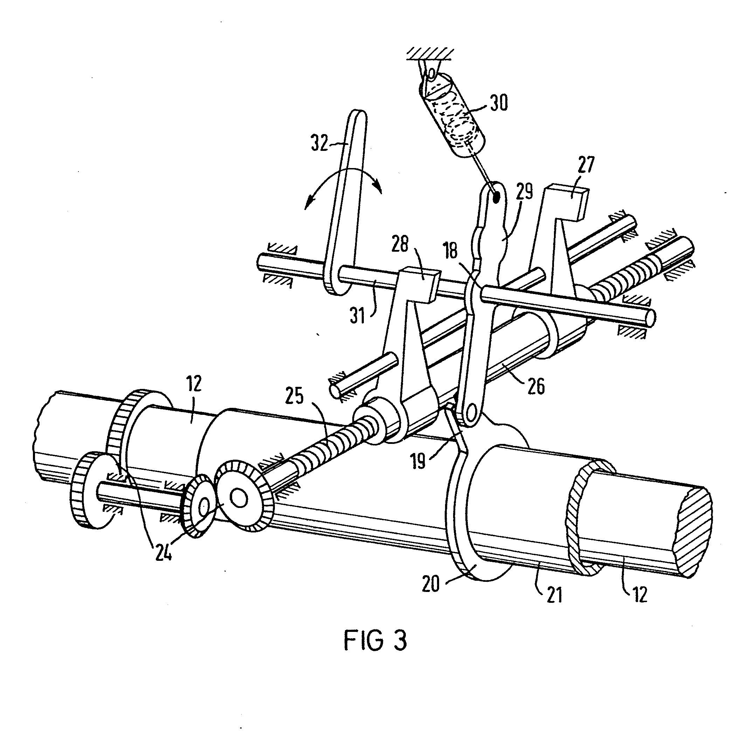

In Fig. 3 ist dargestellt, daß es nicht unbedingt erforderlich ist, die Drehrichtungsumsteuerung der Antriebswelle 12 von der Motorwelle 2 her zu steuern. Es ist vielmehr auch möglich, die Umsteuerung der Steuerhülse 20 und damit der Freilaufkupplungen entweder frei von Hand oder automatisch mit Hilfe von Endanschlägen oder auch kombiniert vorzunehmen. Dies kann etwa dadurch geschehen, daß die Antriebswelle 12 über ein Getriebe 24 eine Steuerwelle in Form einer Gewindestange 25 antreibt, auf der sich eine Gewindehülse 26 bewegt, die an ihren Enden je eine Nase 27 und 28 als Endanschläge trägt, die in den beiden Endstellungen des angetriebenen Schalters die Wippe 29 gegen den Druck der gespannten Schraubenfeder 30 in die eine oder andere Endstellung drücken, so daß die Freilaufkupplungen auf die vorbeschriebene Weise das von den Schwinghebeln 8, 9 erzeugte Drehmoment zwischen den beiden Endstellungen in der einen oder anderen Drehrichtung der Antriebswelle 12 übertragen. Dabei ist es auch möglich, die Wippe 29 von Hand etwa dadurch in die eine oder andere Position zu bewegen, daß die Wippe 29 auf einer Welle 31 gelagert wird, die mit Hilfe des Hebels 32 derart betätigbar ist, daß etwa in der Mittelposition des Schalters mit Hilfe dieses Hebels 32 vorgewählt werden kann, in welche Richtung sich die Antriebswelle 12 bewegen soll.

5 Patentansprüche

3 Figuren

Patentansprüche

1. Elektromotorische Antriebsvorrichtung für die Betätigung eines mehrstufigen Drehschalters in elektrischen Schaltanlagen, die aus einem Antriebsmotor und einem Schwinggetriebe gebildet ist, das eine von der Motorwelle angetriebene Exzenterscheibe besitzt, die von den Schenkeln einer U-förmigen Schwinggabel eines Schwinghebels umgeben ist, der in seinem Drehpunkt eine Antriebswelle für die Betätigung des Drehschalters nabenförmig umgibt und diese Schwinghebelnabe als äußerer Gehäuseteil einer zwischen der Antriebswelle und dem Schwinghebel angeordneten Freilauf-kupplung wirkt, d a d u r c h   g e k e n n z e i c h -n e t ,   daß die Schwinghebelnabe (10, 11) mit dem Innenquerschnitt eines symmetrischen Vielecks einen auf der zylindrischen Antriebswelle (12) drehbar gelagerten, eine der Anzahl der Ecken des Innenquerschnitts der Schwinghebelnabe entsprechende Anzahl von Rollen (15, 16) führenden steuerbaren Käfig (13, 14) derart umgibt, daß sich in der Freilaufstellung die Rollen (15, 16) mit ihren den Käfig (13, 14) außen überragenden Teilen in den durch den inneren Vieleckquerschnitt der Schwinghebelnabe (10, 11) gebildeten Ecken befinden und der steuerbare Käfig (13, 14) mit einer Steuerhülse (20) fest verbunden ist, die von Steuerungsmitteln (5, 17, 18, 19) um einen solchen Winkel schwenkbar ist, daß der steuerbare Käfig (13, 14), ausgehend von der Freilaufstellung, in eine von zwei Kuppelstellungen gelangt, in denen die Rollen an der einen oder anderen der die betreffenden Ecken bildenden Flanken der Innenflächen der Schwinghebelnabe (10, 11) anliegen und diese durch Verkeilung der Rollen (14, 15) in der von der jeweils gewählten Kuppelstellung abhängigen Drehrichtung mit der Antriebswelle (12) kuppeln.

2. Elektromotorische Antriebsvorrichtung nach Anspruch 1, d a d u r c h   g e k e n n z e i c h n e t ,   daß zum Bewegen der Steuerhülse (20) in die eine oder andere Kuppelstellung zum Zwecke der Drehrichtungswahl der Antriebswelle (12) eine von einem auf der Motorwelle (2) angeordneten Steuerring (5) betätigte Wippe (17) vorhanden
ist, die gegen den Druck von Federn (21, 22) die Steuerhülse (20) in Abhängigkeit von der Drehrichtung der Motorwelle (2), ausgehend von der Freilaufstellung im Ruhezustand der Motorwelle (2), in die eine oder andere Kuppelstellung schwenkt.

3. Elektromotorische Antriebsvorrichtung nach Anspruch 1,
d a d u r c h   g e k e n n z e i c h n e t ,   daß lösbare
Halterungsmittel (29, 30, 31) zum Fixieren der Steuerhülse
(20) in der einen oder anderen Kuppelstellung vorhanden sind
und der Antriebswelle (12) eine Betätigungsvorrichtung (24
bis 28) zur Umsteuerung der Halterungsmittel (29,30,31) zugeordnet ist, derart, daß die Steuerhülse (20) aus der vor
Erreichen der jeweiligen Endstellung des Trennschalters eingenommenen Kuppelstellung bei Erreichen der Endstellung in
die andere Kuppelstellung bewegt wird.

4. Elektromotorische Antriebsvorrichtung nach Anspruch 3,
d a d u r c h   g e k e n n z e i c h n e t ,   daß zum
willkürlichen Umsteuern der Halterungsmittel (29,30,31)
von der einen in die andere Kuppelstellung ein von Hand zu
betätigender, auf die Steuerhülse (20) wirkender Steuerhebel (32) vorhanden ist.

5. Elektromotorische Antriebsvorrichtung nach einem der
vorhergehenden Ansprüche,   d a d u r c h   g e k e n n -
z e i c h n e t ,   daß die Motorwelle (2) mehrere
symmetrisch gegeneinander versetzt angeordnete Exzenterscheiben (3, 4) mit jeweils identischen Schwinggetrieben
trägt, so daß pro Umdrehung der Motorwelle (2) eine der
Anzahl der Exzenterscheiben mit Schwinggetriebe entsprechende Anzahl von Drehimpulsen auf die Antriebswelle
(12) einwirken.

FIG 1

FIG 2

FIG 3

<table>
</table>

| | | | 0073923 |
|---|---|---|---|
| Europäisches Patentamt | EUROPÄISCHER RECHERCHENBERICHT | | Nummer der Anmeldung |
| | | | EP 82 10 6866 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | --- <br> FR-A-1 009 506 (SKODA) <br> *Seite 1, rechte Spalte; Absatz 1* | 1,4 | H 01 H 3/26 <br> F 16 H 29/10 <br> F 16 D 41/08 |
| D,Y | --- <br> DE-A-1 490 720 (SACHSENWERK LICHT- UND KRAFT) <br> *Seite 4; Absatz 2* | 1,5 | |
| A | --- <br> FR-A-2 196 221 (WERKZEUG-UNION) <br> *Seite 2, Zeilen 7 bis 37* & DE - A - 2 240 922 | 1,4 | |
| A | --- <br> US-A-2 681 718 (E.M.STONER) <br> *Spalte 4, Zeilen 23 bis 51* | 1,3 | |
| A | --- <br> DE-C-1 060 962 (SIEMENS) <br> *Spalte 4, Zeilen 44 bis 70; Spalte 5, Zeilen 1 bis 7* <br><br> ----- | 1,3 | RECHERCHIERTE SACHGEBIETE (Int. Cl. ³) <br><br> H 01 H 3/00 <br> H 01 H 33/00 <br> F 16 H 29/00 <br> F 16 D 41/00 <br> B 25 B 13/00 |

Der vorliegende Recherchenbericht wurde für alle Patentansprüche erstellt.

| Recherchenort <br> DEN HAAG | Abschlußdatum der Recherche <br> 02-12-1982 | Prüfer <br> LIBBERECHT L.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82